# EUROPÄISCHE PATENTSCHRIFT

(11) **EP 4 052 892 B1**
(45) Veröffentlichungstag und Bekanntmachung des Hinweises auf die Patenterteilung: **21.08.2024**
(21) Anmeldenummer: 21208297.8
(22) Anmeldetag: 15.11.2021
(51) Int. Cl.: B29D 30/02, B29D 30/08, B29D 30/70, B29D 30/06

(54) **VERFAHREN ZUR HERSTELLUNG EINES FAHRZEUGREIFENS**
METHOD FOR PRODUCING A TYRE FOR A VEHICLE
PROCÉDÉ DE FABRICATION D'UN PNEU DE VÉHICULE

(30) Priorität: 04.03.2021 DE 102021202112
(43) Veröffentlichungstag der Anmeldung: 07.09.2022
(73) Patentinhaber: Continental Reifen Deutschland GmbH, 30175 Hannover (DE)
(72) Erfinder: Komischke, Ralf, 30165 Hannover (DE)
(74) Vertreter: Continental Corporation

(56) Entgegenhaltungen:
- EP-A1- 3 385 094
- EP-A1- 3 482 972
- CN-A- 104 648 053

## Beschreibung

Die Erfindung betrifft ein Verfahren zur Herstellung eines Fahrzeugreifens mit einer Rotationsachse, bei welchem ein ringförmiger und mit Druckluft befüllbarer Karkassbereich radial außenseitig mit einem, einen Laufstreifen aufweisenden Außenbereich verbunden wird, wobei zwischen dem Karkassbereich und dem Außenbereich ein ringförmiges Strukturbauteil angeordnet und entlang des radial inneren Umfangs mit dem Karkassbereich und entlang des radial äußeren Umfangs mit dem Außenbereich haftfest und kraftschlüssig verbunden wird.

Mit Druckluft befüllbare Fahrzeugluftreifen sind bei Personen- und Lastkraftwagen Standard und werden üblicherweise auf Reifenbaumaschinen mit anschließender Warmvulkanisation hergestellt.

Neben den mit Druckluft befüllbaren Fahrzeugluftreifen sind in jüngerer Zeit auch zumindest im Versuchsstadium Fahrzeugreifen bekannt geworden, die über keine druckluftgefüllte Kammer verfügen, sogenannte Airless-tires. Diese luftlosen Reifen zeichnen sich durch eine deutlich verringerte Pannenanfälligkeit aus, da sie auch im Falle eines etwaigen Durchstichs zum Beispiel aufgrund eines in die Lauffläche eingedrungenen Nagels oder einer Schraube keinen Druckluftverlust erleiden können. Diese nicht mit Druckluft befüllten Fahrzeugreifen weisen eine Lauffläche als axial äußersten Ringbereich und eine darunter bzw. radial innenseitig angeordnete ringförmige sowie elastisch verformbare Stützstruktur auf, die zugleich auch die Anbindung an eine speziell angepasste Fahrzeugfelge erlaubt. Ein für die industrielle Fertigung hoher Stückzahlen geeignetes Herstellungsverfahren ist jedoch für derartige Reifen noch nicht vorhanden, vielmehr werden diese bislang in aufwändigen Kleinserien beispielsweise im 3-D Druckverfahren, gegebenenfalls kombiniert mit Wickel- und Vulkanisationsverfahren sowie unter Einschluss von Klebe- und Spritzprozessen im Prototypenbau hergestellt.

Aus der EP 3 385 094 A1 ist ein gattungsgemäßer Fahrzeugreifen bekannt, der zwischen dem Karkassbereich und dem Außenbereich ein ringförmiges Strukturbauteil aufweist, welches entlang des radial inneren Umfangs mit dem Karkassbereich und entlang des radial äußeren Umfangs mit dem Außenbereich haftfest und kraftschlüssig verbunden wird. Das bekannte Strukturbauteil ist aus geeignetem Kunststoff spritzgegossen, was sehr aufwändige und kompliziert aufgebaute Werkzeuge erfordert, die einer Serienherstellung hinderlich sind.

Ergänzend wird auch auf die EP 3 482 972 A1 und die CN 104648053 A verwiesen, die ähnliche Ausgestaltungen von fahrzeugreifen offenbaren.

Es ist Aufgabe der Erfindung, ein Verfahren zur Herstellung eines Fahrzeugreifens mit deutlich verringerter Gefahr eines Druckverlustes gegenüber herkömmlichen Fahrzeugluftreifen vorzuschlagen, der sich durch eine vergleichbare Optik und Montierbarkeit an Standard-Fahrzeugfelgen wie ein konventioneller Fahrzeugluftreifen auszeichnet, wobei das Verfahren sich jedoch auch für die industrielle Serienherstellung derartiger Fahrzeugreifen eignen soll.

Zur Lösung der gestellten Aufgabe wird erfindungsgemäß ein Verfahren gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass der Fahrzeugreifen nach wie vor mit einem mit Druckluft befüllbaren Karkassbereich hergestellt wird, was beispielsweise auf bereits vorhandenem Maschinenpark in konventioneller Weise vergleichbar mit Standard-Fahrzeugluftreifen erfolgen kann. Beispielsweise kann der Karkassbereich als Wickelprozess auf einer Baumaschine zu einer Karkasse zusammengestellt und in einem Vulkanisationsverfahren zu dem Karkassbereich vorgefertigt werden. Auch wird der den Laufstreifen aufweisende Außenbereich in an sich bekannter Weise mit seinen Einzelteilen, insbesondere Laufstreifen sowie Verstärkungslagen im Wesentlichen aus Gummi, Stahl und anderen geeigneten Materialien in einem Vulkanisationsverfahren als Ringstruktur produziert, wobei ebenfalls auf bereits vorhandenen Maschinenpark für den Wickelprozess und die anschließende Warmvulkanisation zurückgegriffen werden kann. Erfindungsgemäß wird jedoch der Außenbereich mit Laufstreifen nicht unmittelbar auf den Karkassbereich aufgebracht, sondern es wird ein separat hergestelltes ringförmiges Strukturbauteil vorgesehen, welches entlang des radial inneren Umfangs mit dem Karkassbereich und entlang des radial äußeren Umfangs desselben mit dem Außenbereich haftfest und kraftschlüssig verbunden wird.

Auf diese Weise ist es erfindungsgemäß möglich, unter weitgehendem Rückgriff auf bekannte Produktionsverfahren und -maschinen den Karkassbereich sowie den Außenbereich vorzufertigen und durch Zwischenlage eines ringförmigen Strukturbauteils miteinander zu dem Fahrzeugreifen zu verbinden, wobei durch die erfindungsgemäße Anordnung des Strukturbauteils die radiale Bauhöhe des Karkassbereichs reduziert werden kann, sodass ein Nagel oder eine Schraube im Falle des Durchstichs durch die Lauffläche üblicherweise den Hohlraum im Karkassbereich nicht mehr erreichen kann, was zu der gewünschten hohen Pannensicherheit des Fahrzeugreifens führt. Über das ringförmige Strukturbauteil werden die Kräfte zwischen dem äußeren, mit der Fahrbahn in Kontakt stehenden Außenbereich und dem auf einer Felge aufgezogenen Karkassbereich, der mit Druckluft gefüllt ist, übertragen.

Trotz der reduzierten radialen Bauhöhe des Karkassbereichs kann dieser in Bezug auf seine Anschlussgeometrie an die Felge konventionell ausgebildet sein, sodass der erfindungsgemäß hergestellte Fahrzeugreifen auf Standard-Luftreifenfelgen montiert werden kann.

Erfindungsgemäß wird das Strukturbauteil einteilig als ringförmiges strukturiertes Bauteil vorgefertigt und zwischen Karkassbereich und Außenbereich des Fahrzeugreifens eingebracht und mit diesen haftfest und kraftschlüssig verbunden.

Die haftfeste und kraftschlüssige Verbindung des Strukturbauteils mit dem Karkassbereich bzw. dem Außenbereich des Fahrzeugreifens kann unabhängig von der Ausgestaltung des Strukturbauteils in Form einer flächigen oder bereichsweisen Verklebung oder auch mittels einer Vulkanisation bewirkt werden.

Nach einem Vorschlag der Erfindung wird das ringförmige Strukturbauteil aus einer Vielzahl von ringförmigen Festigkeitsträgern hergestellt, die den Verlauf der Speichen des Strukturbauteils dadurch abbilden, dass sie schräg zur Normalachse entsprechend dem gewünschten Speichenverlauf in gleichen Teilungsabschnitten mäanderförmig zwischen dem radial inneren Umfang und dem radial äußeren Umfang des Strukturbauteiles verlaufen. Diese Festigkeitsträger werden einzeln ausgebildet und anschließend parallel sowie koaxial zueinander zu dem Strukturbauteil geschichtet, wobei nach einem Vorschlag der Erfindung jeweils benachbarte Festigkeitsträger jeweils um einen Teilungsabschnitt versetzt zueinander angeordnet werden, sodass in einem Teilungsabschnitt über alle geschichteten Festigkeitsträger betrachtet jeweils ein entlang des radial inneren Umfangs des Strukturbauteiles verlaufender Festigkeitsträger von einem entlang des radial äußeren Umfangs des Strukturbauteils verlaufenden Festigkeitsträger und dieser erneut von einem entlang des radial inneren Umfangs des Strukturbauteiles verlaufenden Festigkeitsträger usw. gefolgt wird.

Durch den erfindungsgemäß vorgesehenen Versatz in den Teilungsabschnitten zwischen benachbarten geschichteten Festigkeitsträgern wird somit das Strukturbauteil mit radial innerem und radial äußerem Umfang und der gewünschten Anordnung der Speichen aus den geschichteten Festigkeitsträgern gebildet, die anschließend mit dem Karkassbereich und dem Außenbereich zur Ausbildung des Fahrzeugreifens gemäß der Erfindung verbunden werden können. Ein solchermaßen gebildetes Strukturbauteil zeichnet sich durch besonders hohe Festigkeit bei geringem Gewicht aus und kann die einwirkenden Kräfte zwischen Außenbereich und Karkassbereich zuverlässig und verlustfrei übertragen.

Zur Herstellung einer solchen mäanderförmigen Struktur kann beispielsweise ein 3-D-Druckverfahren verwendet werden, in welchem die einzelnen Festigkeitsträger aufeinanderfolgend schichtweise aus einem geeigneten Metall-, Gummi- und/oder Kunststoffmaterial hergestellt werden, indem ein entsprechender Materialstrang mithilfe eines Druckkopfes mäandernd und spiralförmig so übereinander geschichtet wird, bis die Gesamthöhe des gewünschten Strukturbauteiles entsprechend der erforderlichen Breite im herzustellenden Fahrzeugreifen erreicht ist. Anstelle eines 3-D Druckers ist es auch möglich, ein Auflege- / Belegerad zu verwenden, das vorkonfektioniertes Material in die entsprechende Anordnung verbringt.

Nach einem Vorschlag der Erfindung umfasst das Strukturbauteil eine Vielzahl von Speichen, die sich zwischen dem radial inneren und dem radial äußeren Umfang des Strukturbauteils schräg zur Normalachse erstrecken. Durch eine solche Bauweise mit einer Vielzahl von Speichen wird eine zuverlässige Kraftübertragung zwischen dem Außenbereich und dem Karkassbereich sichergestellt, wobei der Materialeinsatz sowie das Gewicht vorteilhaft minimiert und überdies auch die Übertragung von Abrollgeräuschen von der Lauffläche in die Felge minimiert wird.

Anschließend kann das aus den geschichteten Festigkeitsträgern hergestellte Strukturbauteil vor der Verbindung mit dem Karkassbereich und dem Außenbereich nach einem weiteren Vorschlag der Erfindung beispielsweise in einer geeigneten Form mit einer Umhüllung auf Basis von Kunststoff und/oder fließfähige Gummi überzogen werden, welches nach einem weiteren Vorschlag der Erfindung auch zusätzliche Festigkeitsträger in Form von kurzen Fasern oder Filamenten enthalten kann, beispielsweise Glasfasern, Kohlefasern etc., die dem Material beigemischt werden. Für eine Verbesserung der Haftung an den Kontaktstellen kann im Falle einer aus Kunststoff hergestellten Umhüllung das zu umhüllende Strukturbauteil erwärmt werden, um eine verbesserte Anhaftung bzw. Verklebung mit der Umhüllung zu erreichen.

In einer weiteren Ausführungsform der Erfindung können zur Ausbildung des Strukturbauteils auch ringförmige Festigkeitsträger in der mäanderförmig geschichteten Verbundstruktur so angeordnet werden, dass jeweils zwei aufeinanderfolgende Festigkeitsträger mit gleicher Teilung, jedoch aus Materialien mit voneinander verschiedenem thermischen Ausdehnungskoeffizienten gebildet sind und in Bezug auf die Rotationsachse des Fahrzeugreifens einen leichten Höhenversatz aufweisen, wobei die nachfolgenden benachbarten zwei Festigkeitsträger ebenso ausgebildet sind, jedoch um einen Teilungsabschnitt versetzt angeordnet werden. Bei einer solchen Ausgestaltung umfasst jede einzelne Speiche des Strukturbauteils zwei parallel zueinander verlaufende, aus Materialien mit unterschiedlichem thermischem Ausdehnungskoeffizienten gebildete und mit einem leichten Höhenversatz zueinander angeordnete parallel verlaufende Festigkeitsträger, was bei Erwärmung der Speichen zu einer Biegung derselben führt. Auf diese Weise kann der Abrollumfang und/oder die Segmentsteifigkeit des Strukturbauteils angepasst werden.

Die Erwärmung kann passiv durch Reibungsenergie beim Abrollen des Fahrzeugreifens erzeugt werden, sodass beispielsweise die Kontaktfläche zur Fahrbahn unter Erwärmung konstant gehalten werden kann.

Auch ist es möglich, anstelle einer passiven Erwärmung eine aktive Erwärmung vorzusehen, in dem die Festigkeitsträger aus einem elektrisch leitfähigen Material, zum Beispiel Metall, hergestellt werden und an die jeweiligen Enden derselben eine Spannung angelegt wird. Der Stromfluss erhöht sodann die Temperatur des Festigkeitsträgers, sodass er sich entsprechend seiner Ausdehnungskoeffizienten längt und eine Biegung der Speiche mit der gewünschten Änderung der Steifigkeit bzw. des Außendurchmessers des Strukturbauteils eintritt.

Auch bei dieser Ausgestaltung der Erfindung ist es möglich, die Festigkeitsträger mit einer Umhüllung aus geeignetem Gummi und oder Kunststoff zu versehen, wobei insbesondere Leitfähigkeitsadditive der Umhüllung beigemischt werden können.

In das Strukturbauteil können darüber hinaus auch Sensoren, Aktoren, Kommunikationsmodule, Anzeigemodule oder Kombinationen derselben eingebracht werden, wobei zum Beispiel mit einer Leitfähigkeitsadditive enthaltenden Umhüllung Sensoren ausgebildet werden können, die beispielsweise metallische Fremdkörper im Falle eines Durchstichs detektieren können. Ebenfalls kann zum Beispiel durch Induktion eine Spannung generiert werden, die als Energieversorgung für andere Sensoren oder Verbraucher im erfindungsgemäßen Fahrzeugreifen dienen kann.

Die Umhüllung kann beispielsweise in einer Form drucklos in das Strukturbauteil eingebracht oder in einer Form unter Einwirkung von Druck und/oder Temperatur durch Umspritzen der Festigkeitsträger aufgebracht werden.

Die Umhüllung dient dem Schutz der Festigkeitsträger sowie gegebenenfalls verbauter Sensoren, Aktoren etc. vor eindringender Feuchtigkeit.

Eine Lageveränderung der Festigkeitsträger vor dem Einbringen des Strukturbauteils zwischen Karkassbereich und Außenbereich des Fahrzeugreifens kann verhindert werden, in dem die einzelnen Festigkeitsträger an den Kontaktstellen miteinander verbunden werden. Dies kann zum Beispiel mit einer Gummierung durch Vorvulkanisation erfolgen.

Nach einem weiteren Vorschlag der Erfindung kann zur weiteren Aussteifung des Strukturbauteils und zur Verhinderung von Lageveränderungen der einzelnen Festigkeitsträger der Freiraum zwischen benachbarten Speichen zum Beispiel im 3-D Druckverfahren mit einem weiteren Druckkopf mit einem geeigneten Material aufgefüllt werden. Dabei kann es sich um das auch für die Herstellung der Umhüllung verwendete Material handeln oder auch um ein mit Verstärkungsfasern versehenes Füllmaterial auf Basis von Gummi oder Kunststoff.

Nach einem weiteren Vorschlag der Erfindung werden entlang des radial inneren Umfangs und/oder des radial äußeren Umfangs des Strukturbauteils radial einhüllende Gummischichten als Zwischenring aufgebracht und anschließend bei Montage des Strukturbauteils mit dem Karkassbereich bzw. dem Außenbereich haftfest und kraftschlüssig zum Beispiel durch Verklebung oder Vulkanisation verbunden.

An den jeweiligen Wendepunkten der Speichen, an denen diese vom radial äußeren Umfang in Richtung des radial inneren Umfangs und umgekehrt ihre Verlaufsrichtung ändern, können nach einem weiteren Vorschlag der Erfindung Verstärkungselemente befestigt werden, die vorzugsweise aus einem härteren Material als die vorgesehene Umhüllung bestehen.

Um dem mit einem Strukturbauteil zwischen Karkassbereich und Außenbereich versehenen Fahrzeugreifen gemäß der Erfindung ein optisches Aussehen vergleichbar einem Standard-Luftreifen zu geben und das Eindringen von Fremdkörpern in das Strukturbauteil zu verhindern, kann nach einem weiteren Vorschlag der Erfindung das Strukturbauteil im Bereich seiner Seitenflächen mit einer kreisförmigen flexiblen Abdeckung abgedeckt werden, deren radial innerer Rand mit dem Karkassbereich und deren radial äußerer Rand mit dem Außenbereich des Fahrzeugreifens verbunden wird.

Diese Abdeckungen können aus geeignetem Gummi-Werkstoffen oder gummiartigen Werkstoffen, Kunststoffen und weiteren Materialien oder Kombinationen derselben bestehen. Die Abdeckungen können luftdurchlässig sein, um Luftdruckunterschiede auszugleichen.

Da die Abdeckungen die Seitenflächen des Strukturbauteils lediglich überdecken sollen, sind diese vorzugsweise elastisch ausgebildet und können in einem Spritzgussverfahren, Transfermolding-Verfahren oder auch in einem 3-D Druckverfahren hergestellt werden. Der Einsatz eines 3-D Druckverfahrens bringt den Vorteil mit sich, dass beispielsweise individuelle Beschriftungen integral in den Abdeckungen bereits bei deren Herstellung erzeugt werden können.

Vorzugsweise verfügen die Abdeckungen an ihrem inneren und äußeren Durchmesser über konturierte Kontaktflächen, die an die Gestaltung des Außenbereichs bzw. Karkassbereichs angepasst sind und je nach verwendetem Material für die Abdeckungen eine Klebe- oder Vulkanisationsfläche für die Verbindung mit dem Karkassbereich bzw. dem Außenbereich bilden. Auch sind mechanische formschlüssige Verbindungen denkbar. Die Abdeckung kann auch radial innenseitig die Seitenwände des Karkassbereichs zumindest teilweise überdecken.

Weitere Ausgestaltungen und Einzelheiten der Erfindung werden nachfolgend anhand von Ausführungsbeispielen in der Zeichnung erläutert. Es zeigen:
- Figur 1: in perspektivischer Darstellung einen gemäß der Erfindung hergestellten Fahrzeugreifen;
- Figur 2: einen Querschnitt durch den Fahrzeugreifen gemäß Figur 1 ;
- Figur 3: die Aufsicht auf einen Festigkeitsträger;
- Figur 4: die Seitenansicht eines aus einer Vielzahl von Festigkeitsträgern gemäß Figur 3 gebildeten Strukturbauteils;
- Figur 5: die Aufsicht auf das Strukturbauteil gemäß Figur 4;
- Figur 6: in vergrößerter ausschnittsweiser perspektivischer Darstellung eine Ansicht des Strukturbauteils gemäß Figur 5;
- Figur 7: eine weitere Ausführungsform eines Strukturbauteils mit aufgebrachtem Außenbereich in einer Schnittdarstellung;
- Figur 8: das Strukturbauteil gemäß Figur 7 in perspektivischer Darstellung;
- Figur 9: eine ausschnittsweise vergrößerte Seitenansicht des Strukturbauteils gemäß Figur 7;
- Figur 10: eine weitere Ausführungsform eines Strukturbauteils;
- Figur 11: eine weitere Ausführungsform eines Strukturbauteils.

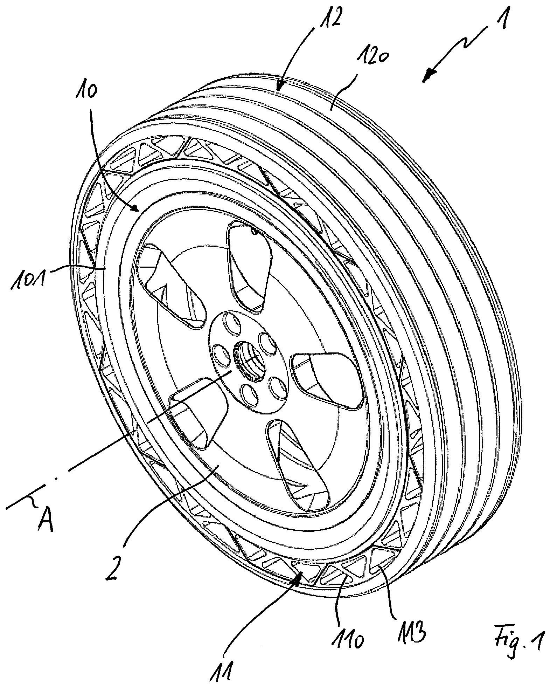

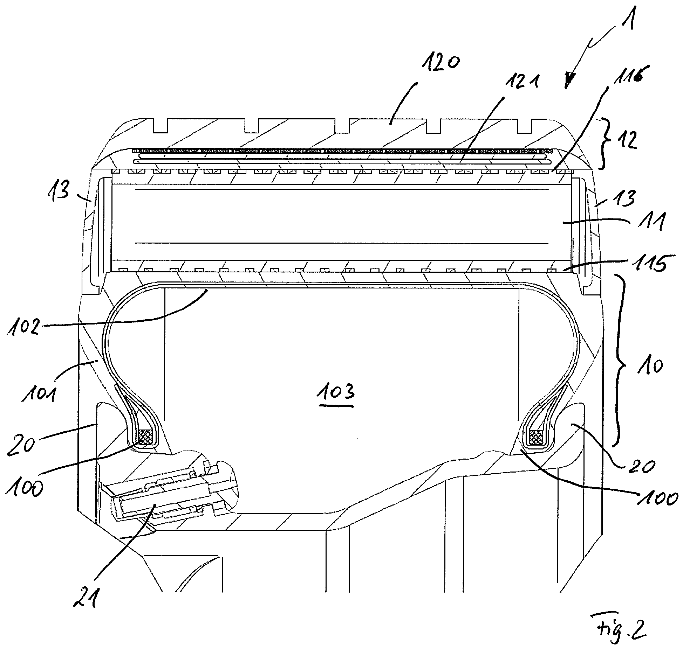

Aus den Figuren 1 und 2 ist ein Fahrzeugreifen 1, beispielsweise konfiguriert als Pkw-Reifen, ersichtlich, der eine Rotationsachse A aufweist und auf einer Standardfelge 2 für Fahrzeugluftreifen montiert ist.

Wie insbesondere aus der Querschnittsdarstellung gemäß Figur 2 ersichtlich, ist der Fahrzeugreifen 1 radial innenseitig mit einem Karkassbereich 10 ausgebildet, der Seitenwände 101 und eine radial außenseitig die Seitenwände 101 verbindende Karkasse 102 umfasst, die in nicht näher dargestellter, jedoch an sich bekannter Weise mit Verstärkungslagen sowie einer luftdichten Innenschicht versehen sind. Radial innenseitig enden die Seitenwände 101 ebenfalls in an sich bekannter Weise in Wulsten 100, die mit nicht näher dargestellten Drahtkernen sowie einem Apex versehen sind.

Aufgrund dieser an sich bekannten Bauform des Karkassbereichs 10 kann der dargestellte Fahrzeugreifen 1 mit den Wulsten 100 zwischen Felgenhörnern 21 der Felge 2 einer üblichen Bauform für Fahrzeugluftreifen eingesteckt und montiert werden. In diesem montierten Zustand umschließt der Karkassbereich 10 gemeinsam mit der Felge 2 einen Hohlraum 103, der über ein in die Felge 2 eingesetztes Ventil 21 mit Druckluft befüllt wird.

Radial außenseitig weist der Fahrzeugreifen 1 einen Außenbereich 12 auf, der den profilierten Laufstreifen 120 sowie mehrere Verstärkungslagen 121 umfasst. Der Laufstreifen 120 bildet umfangsseitig die Lauffläche, mit welchem der Fahrzeugreifen auf der Fahrbahn abrollt.

Wie insbesondere aus der Schnittdarstellung gemäß Figur 2 ersichtlich, steht der die Lauffläche 120 umfassende Außenbereich 12 nicht unmittelbar mit dem druckluftgefüllten Karkassbereich 10 und der die Seitenwände 101 verbindenden Karkasse 102 in flächigem Kontakt, sondern der Karkassbereich 10 erstreckt sich lediglich bis etwa zur Hälfte der Gesamthöhe des Fahrzeugreifens 1. In dem ringförmigen Raum zwischen dem radial innenseitigen Karkassbereich 10 und dem radial außenseitigen Außenbereich 12 ist ein ringförmiges, nicht mit Druckluft befülltes Strukturbauteil 11 eingebracht, welches aus einem geeigneten formstabilen Material in der nachfolgend beschriebenen Weise gebildet ist und eine Vielzahl von durch Freiräume 113 voneinander beabstandete Speichen 110 umfasst, wobei die Speichen 110 so angeordnet sind, dass die dazwischenliegenden Freiräume 113 einen etwa dreieckförmigen Querschnitt quer zur Laufrichtung des Fahrzeugreifens 1 aufweisen und sich die Speichen 110 schräg zur Normalachse erstrecken. Der radial innere Umfang 115 des Strukturbauteils 11 wird mit dem Karkassbereich 10 und der radial äußeren Umfang 116 des Strukturbauteils 11 wird mit dem Außenbereich 12 haftfest und kraftschlüssig, zum Beispiel mittels Verklebung oder Vulkanisation verbunden.

Der druckluftgefüllte Karkassbereich 10 ist von daher durch das dazwischenliegende Strukturbauteil 11 vom Außenbereich 12 mit der Lauffläche 120 radial innenseitig beabstandet, sodass im Falle eines Durchstichs durch die Lauffläche 120, etwa verursacht durch eine Schraube oder einen Nagel, der Hohlraum 103 des Karkassbereichs 10 regelmäßig nicht erreicht wird und insoweit ein Druckverlust und Ausfall des Fahrzeugreifens 1 trotz des erfolgten Durchstichs vermieden wird. Andererseits gewährleistet der konventionelle Aufbau des lediglich in seiner radialen Höhe reduzierten Karkassbereichs 10 die uneingeschränkte Montierbarkeit des Fahrzeugreifens 1 auf Standardfelgen 2.

Die im Fahrbetrieb auftretenden Kräfte und Belastungen des Fahrzeugreifens 1 werden vom Strukturbauteil 11 zwischen Karkassbereich 10 und Außenbereich 12 übertragen, da das Strukturbauteil 11 haftfest und kraftschlüssig mit dem Karkassbereich 10 bzw. dem Außenbereich 12 verbunden wird. Die Speichen 110 des Strukturbauteils 11 steigern darüber hinaus den Komfort und vermindern die Übertragung von Abrollgeräuschen.

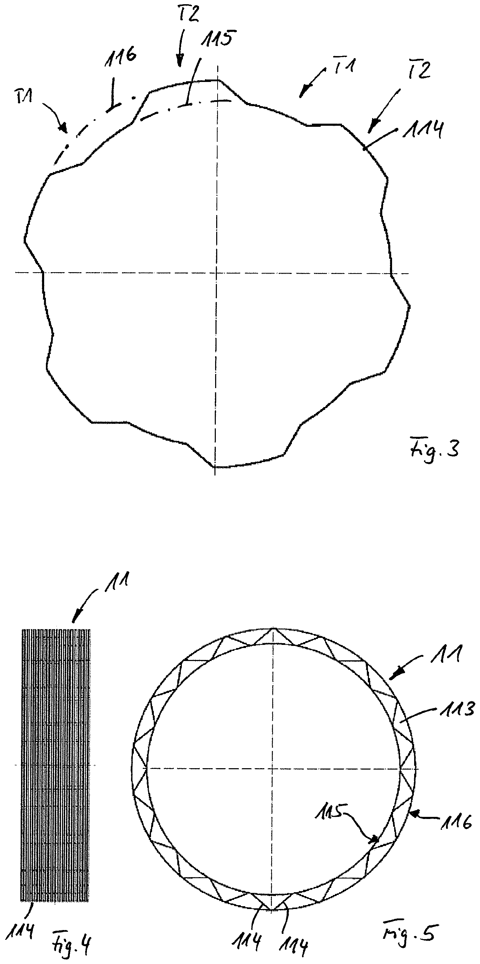

Zur Herstellung des Strukturbauteils 11 werden, wie aus den Figuren 3 bis 5 ersichtlich, ringförmige Festigkeitsträger 114 beispielsweise in einem 3-D Druckverfahren aus Metall, Kunststoff oder Gummimaterial hergestellt. Figur 3 zeigt einen solchen einzelnen Festigkeitsträger 114.

Die Festigkeitsträger 114 sind nicht kreisrund gestaltet, sondern weisen einen in gleich großen Teilungsabschnitten T1, T2 mäanderförmig zwischen dem strichpunktiert angedeuteten radial inneren Umfang 115 und dem radial äußeren Umfang 116 abwechselnden Verlauf auf, wobei jeder Festigkeitsträger 114 von einem entsprechend geformten Materialstrang gebildet wird.

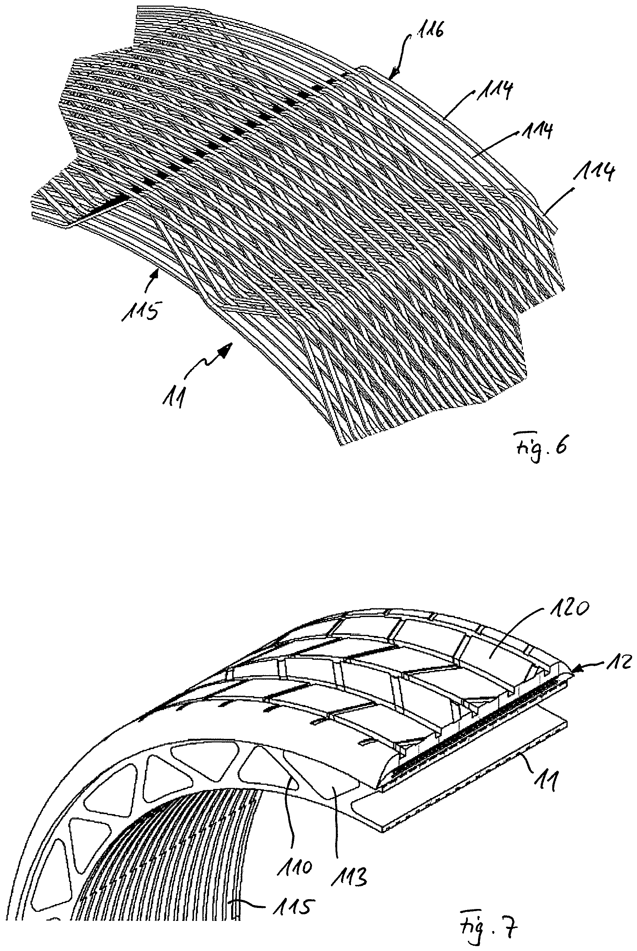

Je nach Breite des herzustellenden Fahrzeugreifens 1 wird eine Vielzahl dieser Festigkeitsträger 114 wie aus Figur 4 ersichtlich parallel und koaxial zueinander zu dem Strukturbauteil 11 geschichtet, wobei jeweils benachbarte Festigkeitsträger 114 um einen Teilungsabschnitt T1 bzw. T2 versetzt zueinander angeordnet werden. Dadurch stellt sich ein die Speichen 110 mit den dazwischenliegenden Freiräumen 113 sowie den radial inneren Umfang 115 und den radial äußeren Umfang 116 des Strukturbauteils darstellender Verlauf der geschichteten Festigkeitsträger 114 ein, der aus den Darstellungen gemäß Figuren 5 und 6 ersichtlich ist. Es wird somit ein aus den geschichteten und versetzt zueinander angeordneten Festigkeitsträgern 114 gebildetes ringförmiges Strukturbauteil 11 hergestellt, welches in nachfolgenden Fügeprozessen mit dem Karkassbereich 10 und dem Außenbereich 12 haftfest und kraftschlüssig verbunden wird.

Der gemäß der Darstellung in Figur 6 vorgefertigte Verbund der das Strukturbauteil 11 ausbildenden Festigkeitsträger 114 kann mit einer geeigneten Umhüllung auf Basis von Kunststoff und/oder fließfähigem Gummi überzogen werden, gegebenenfalls unter Einschluss von Verstärkungsfasern, wie Glasfasern oder Kohlefasern, wobei gegebenenfalls auch die Freiräume 113 zwischen den ausgebildeten Speichen 110 mit derartigem Material aufgefüllt werden können.

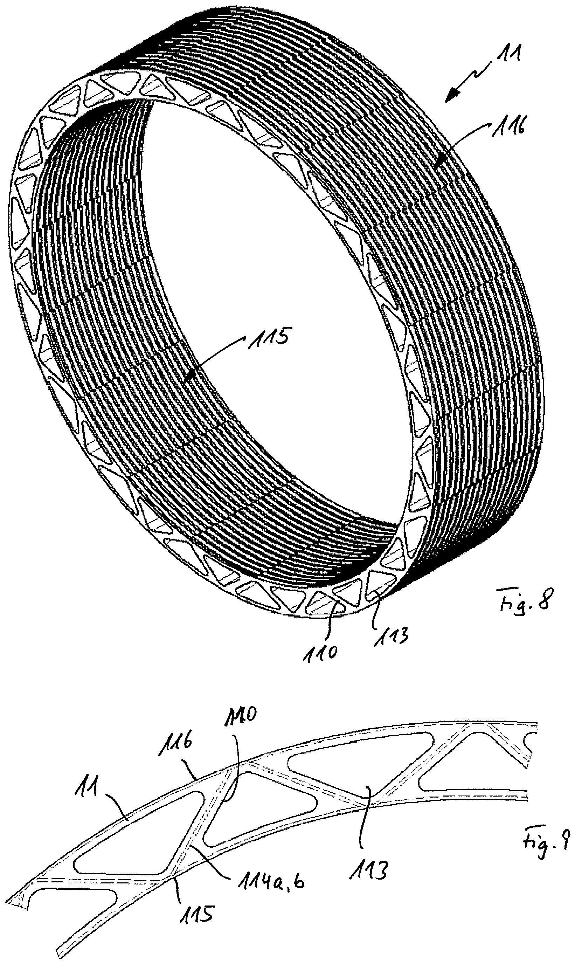

In einer alternativen Ausgestaltung gemäß den Darstellungen in Figuren 7 bis 9 können zur Ausbildung des Strukturbauteils 11 ebenfalls Festigkeitsträger gemäß der Einzelteildarstellung in Figur 3 verwendet werden, wobei jedoch immer zwei benachbarte aufeinanderfolgende Festigkeitsträger 114a, 114b ohne Versatz der Teilungsabschnitte und insoweit parallel verlaufend angeordnet werden. Diese beiden aufeinanderfolgenden Festigkeitsträger 114a, 114b sind aus Materialien mit voneinander verschiedenem thermischen Ausdehnungskoeffizienten gebildet und weisen in Bezug auf die Rotationsachse A einen leichten Höhenversatz auf. Dieser unterschiedliche Ausdehnungskoeffizient führt unter Erwärmung zu einer Biegung der von den beiden Festigkeitsträgern 114a, 114b gemeinsam gebildeten Speiche 110, wodurch die Segmentsteifigkeit bzw. der Abrollumfang des Strukturbauteils 11 und damit letztlich des außenseitig aufgebrachten Laufstreifens 120 verändert werden kann. Dieser Effekt kann über die Breite des Strukturbauteils 11 gezielt genutzt werden, um beispielsweise die Kontaktfläche zur Fahrbahn unter Erwärmung konstant zu halten.

Durch eine aktive Erwärmung zum Beispiel mittels angelegter Spannung an aus Metall hergestellte Festigkeitsträger 114a, 114b kann eine solche Erwärmung auch aktiv und gesteuert eingebracht werden.

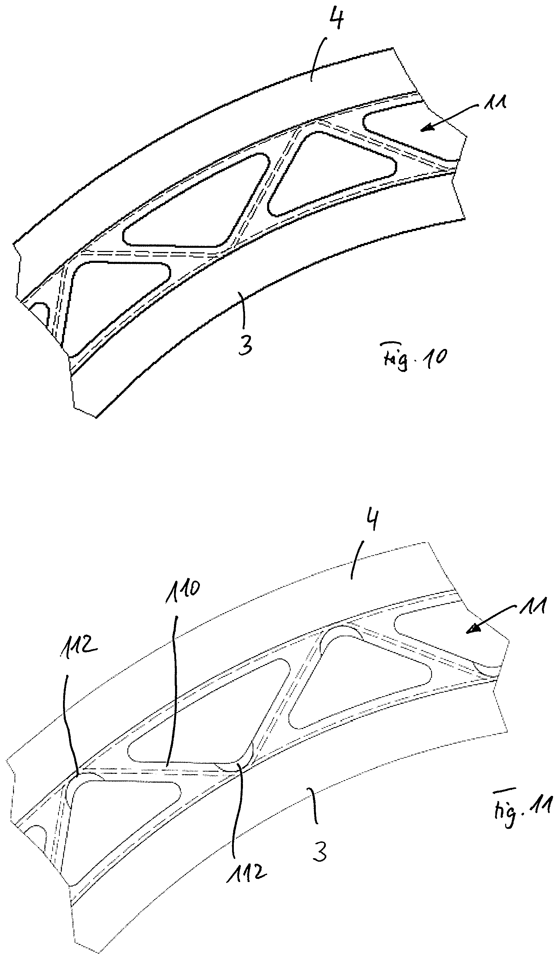

In einer weiteren, aus der Figur 10 ersichtlichen Ausgestaltung kann das Strukturbauteil 11 im Bereich seines radial inneren Umfangs 115 und/oder im Bereich seines radial äußeren Umfangs 116 eine radial einhüllende Gummischicht 3, 4 als Zwischenring aufweisen, die mit dem Strukturbauteil 11 verpresst werden und anschließend haftfest und formschlüssig mit dem Karkassbereich 10 bzw. dem Außenbereich 12 verbunden werden. Auch kann im Bereich des radial inneren Umfangs 115 die erste Gürtellage des Karkassbereichs 10 unmittelbar als begrenzendes Element verwendet werden oder auch der Außenbereich 12 mit Laufstreifen 120 oder Verstärkungseinlage 121 als begrenzendes Element eingesetzt werden.

Schließlich kann gemäß Darstellung in der Figur 11 als Versteifung der einzelnen Speichen 110 an den jeweiligen Wendepunkten des Strukturbauteils 11 die Einbringung von Verstärkungselementen 112 vorgesehen sein, die vorzugsweise aus einem härteren Material als eine Umhüllung der Festigkeitsträger 114 gebildet sind.

Im Strukturbauteil 11 können auch Sensoren, Aktoren sowie weitere elektronische Baugruppen integriert werden, beispielsweise kann die Umhüllung der Festigkeitsträger durch Zusatz von Leitfähigkeitsadditiven leitfähig eingestellt werden und beispielsweise metallene Fremdkörper im Falle eines Durchstichs detektieren. Ebenfalls ist es denkbar, durch Induktionsprozesse eine Spannung zu generieren, die zum Beispiel als Energieversorgung für weitere Sensoren oder andere Verbraucher auch in angrenzenden weiteren Reifenbauteilen dienen kann.

Die in der Darstellung gemäß Figur 1 offene Struktur des Strukturbauteils 11 kann darüber hinaus durch in der Figur 2 ersichtliche seitliche Abdeckungen 13 abgedeckt werden. Dabei wird die Abdeckung 13 mit ihrem radial inneren Randbereich am Karkassbereich 10 und mit ihrem radial äußeren Randbereich am Außenbereich 12 des Fahrzeugreifens 1 befestigt, sodass sie den Bauraum des Strukturbauteils 11 frei überspannt. Durch die Abdeckungen, die in der Figur 1 nicht eingezeichnet sind, erhält der Fahrzeugreifen 1 trotz seiner durchstichresistenten Ausgestaltung eine vergleichbare Optik wie ein konventioneller Fahrzeugluftreifen. Beschädigungen der Abdeckung 13 durch Kontakt mit Fremdkörpern oder Durchstich führen nicht zum Ausfall des Fahrzeugreifens, da in diesem Bereich keine Druckluftfüllung vorliegt.

Ferner verhindern die seitlichen Abdeckungen 13 eine Ansammlung von Fremdkörpern in den Freiräumen 113 des Strukturbauteils 11. Die Abdeckungen 13 können aus Gummi, gummiartigen Werkstoffen, Kunststoffen oder weiteren geeigneten Materialien oder Kombinationen derselben hergestellt werden, beispielsweise im Spritzgussverfahren. Die Abdeckungen 13 werden vorzugsweise über konturierte Kontaktflächen mit dem Karkassbereich 10 und dem Außenbereich 12 durch Verkleben oder Vulkanisation verbunden, wobei gegebenenfalls auch mechanische Verbindungen vorgesehen werden können.

Der vorangehend beschriebene Fahrzeugreifen 1 lässt sich in seinem Karkassbereich 10 und seinem Außenbereich 12 unter weitgehender Nutzung bereits vorhandener Fertigungs- und Produktionsmittel auf üblichen Reifenbaumaschinen herstellen, wobei lediglich das Strukturbauteil 11 gesondert hergestellt und als Zwischenlage zwischen Karkassbereich 10 und Außenbereich 12 im Zuge der Herstellung des Fahrzeugreifens eingebracht wird. Dieses kann in seiner Breite leicht an die Dimension des Fahrzeugreifens 1 angepasst werden.

Eine kostengünstige industrielle Fertigung in großen Stückzahlen ist damit problemlos möglich, überdies lässt sich der Fahrzeugreifen 1 aufgrund seiner Montierbarkeit auf Standard-Luftreifenfelgen problemlos in bereits vorhandene Fahrzeugumgebungen integrieren.

Der nach dem erfindungsgemäßen Verfahren hergestellte Fahrzeugreifen 1 weist eine erhöhte Pannensicherheit bei vergleichbarer Optik zu einem Standardreifen sowie im Falle eines Druckverlustes aus dem Karkassbereich 10 auch die gewünschten Notlaufeigenschaften auf.

### Bezugszeichenliste

- 1:: Fahrzeugreifen
- 2:: Felge
- 3:: Zwischenring
- 4:: Zwischenring
- 10:: Karkassbereich
- 11:: Strukturbauteil
- 12:: Außenbereich
- 13:: Abdeckung
- 20:: Felgenhorn
- 21:: Ventil
- 100:: Wulst
- 101:: Seitenwand
- 102:: Karkasse
- 103:: Hohlraum
- 110:: Speichen
- 112:: Verstärkungselement
- 113:: Freiraum
- 114:: Festigkeitsträger
- 115:: radial innerer Umfang
- 116:: radial äußerer Umfang
- 120:: Laufstreifen
- 121:: Verstärkungseinlage

- A:: Rotationsachse

## Patentansprüche

1. Verfahren zur Herstellung eines Fahrzeugreifens (1) mit einer Rotationsachse (A), bei welchem ein ringförmiger und mit Druckluft befüllbarer Karkassbereich (10) radial außenseitig mit einem, einen Laufstreifen (120) aufweisenden Außenbereich (12) verbunden wird, wobei zwischen dem Karkassbereich (10) und dem Außenbereich (12) ein ringförmiges Strukturbauteil (11) angeordnet und entlang des radial inneren Umfangs (115) mit dem Karkassbereich (10) und entlang des radial äußeren Umfangs (116) mit dem Außenbereich (12) haftfest und kraftschlüssig verbunden wird, **dadurch gekennzeichnet, dass** das Strukturbauteil (11) einteilig ausgebildet ist, indem
a) ringscheibenförmige Festigkeitsträger (114) hergestellt werden, die schräg zur Normalachse in gleichen Teilungsabschnitten (T1, T2) mäanderförmig zwischen dem radial inneren Umfang (115) und dem radial äußeren Umfang (116) des Strukturbauteils (11) verlaufen und parallel und koaxial zueinander zu dem Strukturbauteil (11) geschichtet werden, wobei jeweils benachbarte Festigkeitsträger (114) jeweils um einen Teilungsabschnitt (T1, T2) versetzt zueinander angeordnet werden; oder
b) ringscheibenförmige Festigkeitsträger (114) hergestellt werden, die schräg zur Normalachse in gleichen Teilungsabschnitten (T1, T2) mäanderförmig zwischen dem radial inneren Umfang (115) und dem radial äußeren Umfang (116) des Strukturbauteils (11) verlaufen und parallel und koaxial zueinander zu dem Strukturbauteil (11) geschichtet werden, wobei jeweils zwei aufeinanderfolgende Festigkeitsträger (114 a, 114 b) aus Materialien mit voneinander verschiedenem thermischen Ausdehnungskoeffizienten gebildet sind in Bezug auf die Rotationsachse (A) einen Höhenversatz aufweisen und die benachbarten zwei aufeinanderfolgenden Festigkeitsträger (114) um einen Teilungsabschnitt (T1, T2) versetzt angeordnet werden.

2. Verfahren nach Anspruch 1, **dadurch gekennzeichnet, dass** das Strukturbauteil (11) eine Vielzahl von Speichen (110) umfasst, die sich zwischen dem radial inneren und dem radial äußeren Umfang (115, 116) des Strukturbauteiles (11) schräg zur Normalachse erstrecken.

3. Verfahren nach einem der Ansprüche 1 oder 2, **dadurch gekennzeichnet, dass** die Festigkeitsträger (114) in einem 3D-Druckverfahren schichtweise aufeinandergelegt werden und aus einem Metall-, Gummi- und/oder Kunststoffmaterial hergestellt werden.

4. Verfahren nach einem der Ansprüche 1 bis 3, **dadurch gekennzeichnet, dass** die Festigkeitsträger (114) mit einer Umhüllung auf Basis von Kunststoff und/oder fließfähigem Gummi überzogen werden.

5. Verfahren nach Anspruch 4, **dadurch gekennzeichnet, dass** die Umhüllung Fasern, Filamente und/oder Leitfähigkeitsadditive enthält.

6. Verfahren nach einem der Ansprüche 1 bis 5, **dadurch gekennzeichnet**, das entlang des radial inneren Umfangs (115) und/oder des radial äußeren Umfanges (116) des Strukturbauteils (11) eine radial einhüllende Gummischicht als Zwischenring (3, 4) aufgebracht und anschließend mit dem angrenzenden Karkassbereich (10) bzw. Außenbereich (12) verbunden wird.

7. Verfahren nach einem der Ansprüche 1 bis 6, **dadurch gekennzeichnet, dass** in das Strukturbauteil (11) Sensoren, Aktoren, energieerzeugende Module, Kommunikationsmodule, Anzeigemodulen oder Kombinationen derselben eingebracht werden.

8. Verfahren nach einem der Ansprüche 1 bis 7, **dadurch gekennzeichnet, dass** das Strukturbauteil (11) im Bereich seiner Seitenflächen mit einer kreisringförmigen flexiblen Abdeckung (13) abgedeckt wird, deren radial innerer Rand mit dem Karkassbereich (10) und der radial äußere Rand mit dem Außenbereich (12) des Fahrzeugreifens (1) verbunden wird.

## Claims

1. Method for producing a vehicle tyre (1) having an axis of rotation (A), in which an annular carcass region (10) which can be filled with compressed air is connected radially on the outside to an outer region (12) having a tread (120), wherein an annular structural component (11) is arranged between the carcass region (10) and the outer region (12) and is connected in a firmly adhering and frictionally engaging manner to the carcass region (10) along the radially inner circumference (115) and to the outer region (12) along the radially outer circumference (116), **characterized in that** the structural component (11) is configured in one piece by
a) annular disc-shaped strengthening members (114) being produced which run obliquely to the normal axis in identical division portions (T1, T2) so as to meander between the radially inner circumference (115) and the radially outer circumference (116) of the structural component (11) and are layered parallel and coaxially to one another to form the structural component (11), wherein in each case adjacent strengthening members (114) are each arranged so as to be offset from one another by a division portion (T1, T2); or
b) annular disc-shaped strengthening members (114) being produced which run obliquely to the normal axis in identical division portions (T1, T2) so as to meander between the radially inner circumference (115) and the radially outer circumference (116) of the structural component (11) and are layered parallel and coaxially to one another to form the structural component (11), wherein in each case two successive strengthening members (114a, 114b) are formed from materials having mutually different coefficients of thermal expansion and have a height offset with respect to the axis of rotation (A), and the adjacent two successive strengthening members (114) are arranged so as to be offset by a division portion (T1, T2).

2. Method according to Claim 1, **characterized in that** the structural component (11) comprises a multiplicity of spokes (110), which extend obliquely to the normal axis between the radially inner and the radially outer circumference (115, 116) of the structural component (11).

3. Method according to either of Claims 1 and 2, **characterized in that** the strengthening members (114) are laid on one another in layers in a 3D printing process and are produced from a metal, rubber and/or plastics material.

4. Method according to one of Claims 1 to 3, **characterized in that** the strengthening members (114) are coated with an envelope based on plastic and/or free-flowing rubber.

5. Method according to Claim 4, **characterized in that** the envelope contains fibres, filaments and/or conductivity additives.

6. Method according to one of Claims 1 to 5, **characterized in that** a radially encasing rubber layer as intermediate ring (3, 4) is applied along the radially inner circumference (115) and/or the radially outer circumference (116) of the structural component (11) and is then connected to the adjoining carcass region (10) or outer region (12).

7. Method according to one of Claims 1 to 6, **characterized in that** sensors, actuators, energy-generating modules, communication modules, display modules or combinations thereof are incorporated in the structural component (11).

8. Method according to one of Claims 1 to 7, **characterized in that** the structural component (11) is covered in the region of its lateral surfaces with a circular ringshaped flexible cover (13), the radially inner edge of which is connected to the carcass region (10) and the radially outer edge of which is connected to the outer region (12) of the vehicle tyre (1).

## Revendications

1. Procédé de fabrication d'un pneu de véhicule (1) avec un axe de rotation (A), dans lequel une zone de carcasse (10) de forme annulaire et pouvant être remplie d'air comprimé est reliée radialement du côté extérieur à une zone extérieure (12) présentant une bande de roulement (120), un composant structurel de forme annulaire (11) étant agencé entre la zone de carcasse (10) et la zone extérieure (12) et étant relié par adhérence et par force le long de la périphérie radialement intérieure (115) à la zone de carcasse (10) et le long de la périphérie radialement extérieure (116) à la zone extérieure (12), **caractérisé en ce que** le composant structurel (11) est réalisé d'un seul tenant, par le fait que
a) des supports de résistance (114) en forme de disques annulaires sont fabriqués, qui s'étendent en oblique par rapport à l'axe normal dans des sections de division égales (T1, T2) en forme de méandres entre la périphérie radialement intérieure (115) et la périphérie radialement extérieure (116) du composant structurel (11) et qui sont stratifiés parallèlement et coaxialement les uns par rapport aux autres pour former le composant structurel (11), des supports de résistance (114) respectivement voisins étant agencés respectivement décalés les uns par rapport aux autres d'une section de division (T1, T2) ; ou
b) des supports de résistance (114) en forme de disques annulaires sont fabriqués, qui s'étendent en oblique par rapport à l'axe normal dans des sections de division égales (T1, T2) en forme de méandres entre la périphérie radialement intérieure (115) et la périphérie radialement extérieure (116) du composant structurel (11) et qui sont stratifiés parallèlement et coaxialement les uns par rapport aux autres pour former le composant structurel (11), deux supports de résistance successifs (114a, 114b) étant respectivement formés de matériaux ayant des coefficients de dilatation thermique différents l'un de l'autre, présentant un décalage en hauteur par rapport à l'axe de rotation (A), et les deux supports de résistance successifs voisins (114) étant agencés décalés d'une section de division (T1, T2).

2. Procédé selon la revendication 1, **caractérisé en ce que** le composant structurel (11) comprend une pluralité de rayons (110) qui s'étendent entre les périphéries radialement intérieure et radialement extérieure (115, 116) du composant structurel (11) en oblique par rapport à l'axe normal.

3. Procédé selon l'une quelconque des revendications 1 ou 2, **caractérisé en ce que** les supports de résistance (114) sont superposés par couches dans un procédé d'impression 3D et sont fabriqués à partir d'un matériau métallique, en caoutchouc et/ou en plastique.

4. Procédé selon l'une quelconque des revendications 1 à 3, **caractérisé en ce que** les supports de résistance (114) sont recouverts d'une enveloppe à base de plastique et/ou de caoutchouc fluide.

5. Procédé selon la revendication 4, **caractérisé en ce que** l'enveloppe contient des fibres, des filaments et/ou des additifs de conductivité.

6. Procédé selon l'une quelconque des revendications 1 à 5, **caractérisé en ce que**, le long de la périphérie radialement intérieure (115) et/ou de la périphérie radialement extérieure (116) du composant structurel (11), une couche de caoutchouc enveloppante radialement est appliquée en tant que bague intermédiaire (3, 4) et est ensuite reliée à la zone de carcasse (10) ou à la zone extérieure (12) adjacente.

7. Procédé selon l'une quelconque des revendications 1 à 6, **caractérisé en ce que** des capteurs, des actionneurs, des modules de production d'énergie, des modules de communication, des modules d'affichage ou des combinaisons de ceux-ci sont incorporés dans le composant structurel (11).

8. Procédé selon l'une quelconque des revendications 1 à 7, **caractérisé en ce que** le composant structurel (11) est recouvert, dans la zone de ses surfaces latérales, par un revêtement flexible (13) en forme d'anneau circulaire, dont le bord radialement intérieur est relié à la zone de carcasse (10) et le bord radialement extérieur est relié à la zone extérieure (12) du pneu de véhicule (1).
